# EUROPÄISCHE PATENTANMELDUNG

(11) **EP 2 025 557 A1**
(43) Veröffentlichungstag der Anmeldung: **18.02.2009**
(21) Anmeldenummer: 07015517.1
(22) Anmeldetag: 07.08.2007
(51) Int. Cl.: B60R 7/06, E05F 1/10, E05F 3/14, B60N 3/10

(54) **Verbindungsmodulbaugruppe**

(71) Anmelder: Delphi Technologies, Inc., Troy, Michigan 48007 (US)
(72) Erfinder: Ramaer, Norbert, 50171 Kerpen (DE); Goepper, Uwe, 42283 Wuppertal (DE); Knappe, Timm, 51519 Odenthal (DE)
(74) Vertreter: Manitz, Finsterwald & Partner GbR

(57) **Zusammenfassung**

Die Erfindung betrifft eine Verbindungsmodulbaugruppe zum beweglichen Verbinden eines ersten und eines zweiten Bauteils (14,12). Die Verbindungsmodulbaugruppe umfasst ein Verbindungsmodul (18), das zumindest ein Hebelelement (22) mit zwei Achsabschnitten, zumindest ein elastisches Aktuierungselement (28) und zumindest ein Dämpfungselement (30) aufweist. Weiterhin ist eine mit dem ersten Bauteil (14) verbundene Führungsanordnung (36) mit einem Anschlagelement vorgesehen, die mit dem Hebelelement (22) des Verbindungsmoduls zusammenwirkt, um eine Relativbewegung der Bauteile zu kontrollieren und zu begrenzen. Die Verbindungsmodulbaugruppe umfasst weiterhin eine mit dem zweiten Bauteil (12) verbundene Befestigungsanordnung (34,34') zur Befestigung des Verbindungsmoduls (18), wobei das Hebelelement relativ zu der Befestigungsanordnung drehbar um eine Hebeldrehachse angeordnet ist. Das Hebelelement (22) und das Dämpfungselement (30) sind als separate und für eine Vormontage miteinander kombinierbare Einheiten ausgebildet, die in einem kombinierten Zustand eine Befestigung des Verbindungsmoduls (18) an der Befestigungsanordnung (34,34') ermöglichen.

## Beschreibung

Die vorliegende Erfindung betrifft eine Verbindungsmodulbaugruppe, insbesondere zur Verwendung in einem Kraftfahrzeug, zum beweglichen Verbinden eines ersten und eines zweiten Bauteils.

Bauteile sollen oftmals derart beweglich miteinander verbunden werden, dass relative Bewegungen auf kontrollierte und "weiche" Weise erfolgen. In der Praxis, etwa im Innenraum eines Fahrzeugs, ist insbesondere die Realisierung eines "weichen" Verdrehens des ersten Bauteils relativ zu dem zweiten Bauteil von Bedeutung. So sind beispielsweise bei Aschenbechern, Becherhaltern oder Handschuhfachdeckeln spezielle Funktionselemente vorgesehen, durch die anwenderfreundliche Öffnungs- und Schließbewegungen erzeugt werden. Außerdem sollen die Funktionselemente für ein stets gleichmäßiges Öffnen bzw. Schließen der genannten Einheiten sorgen, auch wenn sich das Fahrzeug in verschiedenen Situationen befindet. Weiterhin sollen die Bewegungen der Bauteile relativ zueinander auch begrenzt werden, so dass definierte Zustände - z.B. offen/geschlossen - erreicht und beibehalten werden können.

Um die genannten Erfordernisse zu erfüllen, müssen spezielle Funktionselemente zur Umsetzung von drei unterschiedlichen Funktionen vorgesehen sein:
1. Es muss eine Kraft bereitgestellt werden, die eine relative Bewegung zwischen den Bauteilen erzeugt. Diese Funktion kann beispielsweise durch verschiedene Arten von elastischen Bauelementen, wie etwa Federn, erfüllt werden.
2. Es muss eine dämpfende Komponente bereitgestellt werden, durch die die vorstehend genannte Kraft gedämpft wird, um abrupte Bewegungen zu vermeiden und eine "sanfte" Bewegung der Bauteile zueinander zu erzeugen.
3. Es muss eine Stoppfunktion bereitgestellt werden, die die Relativbewegung der beiden Bauteile führt und begrenzt. Außerdem muss für eine hinreichend gute Stabilisierung der beiden Bauteile während und nach der Bewegung gesorgt werden.

Bekannte Verbindungskonzepte, die derartiges zu leisten vermögen, umfassen zumeist eine Baugruppe mit separaten Funktionselementen, die an verschiedenen Stellen der miteinander beweglich zu verbindenden Bauteile befestigt werden. Mit anderen Worten werden die vorstehend genannten Funktionen durch räumlich getrennt voneinander angeordnete Funktionselemente erfüllt, die in mehreren Montageschritten montiert werden müssen, was zu erheblichen Kosten führt. Außerdem sind diese Konzepte vergleichsweise aufwändig und weisen einen großen Platzbedarf auf. Sie lassen sich daher nur schwer in den meist nur sehr begrenzt zur Verfügung stehenden Bauraum eines Fahrzeugs integrieren.

Der Erfindung liegt die Aufgabe zugrunde, eine verbesserte Baugruppe zur beweglichen Verbindung zweier Bauteile zu schaffen, die eine kontrollierte und "weiche" Relativbewegung der zwei verbundenen Bauteile gewährleistet. Dabei soll sie gleichzeitig Platz sparend und kompakt sein. Die verbesserte Baugruppe soll zudem auf einfache und zuverlässige Weise montierbar sein.

Die Lösung dieser Aufgabe erfolgt durch eine Verbindungsmodulbaugruppe mit den Merkmalen des unabhängigen Anspruchs 1.

Die erfindungsgemäße Verbindungsmodulbaugruppe zum beweglichen Verbinden eines ersten und eines zweiten Bauteils umfasst ein Verbindungsmodul, das zumindest ein Hebelelement mit zwei Achsabschnitten, zumindest ein elastisches Aktuierungselement und zumindest ein Dämpfungselement aufweist. Die Verbindungsmodulbaugruppe umfasst weiterhin eine mit dem ersten Bauteil verbundene Führungsanordnung mit einem Anschlagelement, die mit dem Hebelelement des Verbindungsmoduls zusammenwirkt, um eine Relativbewegung der Bauteile zu kontrollieren und zu begrenzen. Außerdem umfasst die Verbindungsmodulbaugruppe eine mit dem zweiten Bauteil verbundene Befestigungsanordnung, wobei das Hebelelement relativ zu der Befestigungsanordnung drehbar um eine Hebeldrehachse angeordnet ist. Das Hebelelement und das Dämpfungselement sind als separate Einheiten ausgebildet, die für eine Vormontage miteinander kombinierbar sind. In einem kombinierten Zustand ermöglichen das Hebelelement und das Dämpfungselement eine Befestigung des Verbindungsmoduls an der Befestigungsanordnung.

Mit anderen Worten ist das Verbindungsmodul sowohl mit dem ersten als auch mit dem zweiten Bauteil verbunden. Das elastische Aktuierungselement des Verbindungsmoduls stellt die vorstehend beschriebene Kraft zur Erzeugung einer Relativbewegung der beiden Bauteile bereit, während das Dämpfungselement diese Kraft entsprechend einer gewählten Dämpfungscharakteristik dämpft, wodurch eine gewünschte "weiche" Bewegung erzeugt wird.

Die mit dem ersten Bauteil verbundene Führungsanordnung dient zur kontrollierten Bewegung der beiden Bauteile gegeneinander, wobei diese Bewegung durch das Anschlagelement begrenzt wird. Dadurch wird die dritte der beschriebenen Funktionen erfüllt.

Die Verbindungsmodulbaugruppe umfasst weiterhin die Befestigungsanordnung, die mit dem zweiten Bauteil verbunden ist. An der Befestigungsanordnung wird das Verbindungsmodul befestigt. Die Befestigung erfolgt dabei derart, dass die Rotation des Hebelelements relativ zu der Befestigungsanordnung möglich ist. Diese Rotation erfolgt um die Hebeldrehachse.

Beispielsweise ist das erste Bauteil eine Klappe im Innenraum eines Fahrzeugs, die an einem Armaturenbrett eines Fahrzeugs befestigt ist und die einen Stauraum abdeckt. Bei Entriegelung der Klappe wird eine durch das elastische Aktuierungselement erzeugte und das Dämpfungselement gedämpfte Bewegung des Hebelelements über die Führungsanordnung auf die Klappe übertragen, wodurch sich die Klappe in einer "weichen" Bewegung öffnet. Die maximale Öffnung der Klappe wird durch das Anschlagelement der Führungsanordnung festlegt.

Das Hebelelement und das Dämpfungselement sind separate Einheiten, die zur Montage zusammengefügt und an der Befestigungsanordnung befestigt werden. Das Zusammenfügen stellt also eine Vormontage des Verbindungsmoduls dar, das dann in einem einzigen Schritt an dem zweiten Bauteil befestigt werden kann. Je nach Ausgestaltung der Führungsanordnung kann ein weiterer Montageschritt zur Verbindung des Hebelelements und der Führungsanordnung erforderlich sein.

Das Verbindungsmodul stellt somit die wesentlichen Funktionen einer kontrollierten beweglichen Verbindung zweier Bauteile bereit. In einem vormontierten Zustand ist das Verbindungsmodul sehr kompakt. Überdies ist dessen Montage einfacher und effizienter als bei herkömmlichen Lösungen. Ein zusätzlicher Vorteil besteht darin, dass das Befestigen des Verbindungsmoduls gar nicht möglich ist, wenn das Hebelelement und das Dämpfungselement nicht miteinander kombiniert sind. Somit wird gleichzeitig ein Aspekt der Qualitätssicherung erfüllt, der dazu beiträgt, Kosten zu sparen, die entstehen, wenn fehlerhaft montierte Bauteile ausgetauscht werden müssen oder Nachbesserungen erforderlich sind.

Vorteilhafte Ausführungsformen der Erfindung sind in den Unteransprüchen, der Beschreibung und den Zeichnungen angegeben.

Gemäß einer Ausführungsform der erfindungsgemäßen Verbindungsmodulbaugruppe ist das Dämpfungselement drehfest mit dem Hebelelement und der Befestigungsanordnung und/oder dem zweiten Bauteil verbunden, wobei das Dämpfungselement eine Drehung des Hebelelements relativ zu der Befestigungsanordnung zulässt. Beispielsweise ist ein Teil des Dämpfungselements mit dem Hebelelement verbunden, während ein anderer Teil des Dämpfungselements mit der Befestigungsanordnung verbunden ist. Die dämpfende Wirkung des Dämpfungselements kann beispielsweise durch viskose Reibung zwischen den beiden Teilen des Dämpfungselements hervorgerufen werden, die der aktuierenden Kraft entgegen wirkt. Selbstverständlich können auch andere Dämpfungskonzepte verwendet werden.

In einer weiteren Ausführungsform ist einer der Achsabschnitte des Hebelelements mit der Befestigungsanordnung verbunden und der andere Achsabschnitt ist mit dem Dämpfungselement verbunden. Alternativ kann vorgesehen sein, dass beide Achsabschnitte des Hebelelements mit einem Dämpfungselement verbunden sind.

Das Dämpfungselement kann einen Lagerabschnitt zur Verbindung des Dämpfungselements mit der Befestigungsanordnung aufweisen, wobei der Lagerabschnitt in dem kombinierten Zustand des Dämpfungselements und des Hebelelements koaxial zu den Achsenabschnitten des Hebelelements angeordnet ist. Beispielsweise wird das Dämpfungselement auf einen Achsabschnitt des Hebelelements aufgesteckt. Das so vormontierte Verbindungsmodul kann dann mittels des anderen Achsabschnitts des Hebelelements und des Lagerabschnitts an der Befestigungsanordnung befestigt werden. Wenn beide Achsabschnitte des Hebelelements mit einem Dämpfungselement verbunden sind, kann vorgesehen sein, dass das Hebelelement nicht direkt mit der Befestigungsanordnung in Kontakt steht, sondern dass die Lagerabschnitte der zwei Dämpfungselemente mit der Befestigungsanordnung verbunden sind.

Mit anderen Worten kann in diesen Fällen die Befestigung des Verbindungsmoduls erst nach der Kombination des Hebelelements mit zumindest einem Dämpfungselement erfolgen. Das Verbindungsmodul ist somit lediglich in dem vormontierten Zustand ordnungsgemäß an der Befestigungsanordnung befestigbar.

In einer vorteilhaften Ausführungsform weist das Aktuierungselement zumindest eine Feder auf, wobei die Feder insbesondere eine Spiralfeder ist, die koaxial zu der Hebeldrehachse angeordnet ist. Grundsätzlich können auch andere Federtypen und/oder Federorientierungen vorgesehen sein.

Gemäß einer weiteren Ausführungsform der erfindungsgemäßen Verbindungsmodulbaugruppe ist die Hebelachse parallel zu einer Bauteildrehachse angeordnet, um die das erste Bauteil relativ zu dem zweiten Bauteil drehbar ist.

Die Führungsanordnung kann einen Schlitz oder eine Nut umfassen, die mit einem Führungsstift des Hebelelements zusammenwirkt.

Es erweist sich als vorteilhaft, wenn die Befestigungsanordnung zwei Befestigungselemente umfasst, zwischen denen das Hebelelement und das zumindest eine Dämpfungselement in einem endmontierten Zustand des Verbindungsmoduls angeordnet sind.

Um die Montage der Verbindungsmodulbaugruppe zu vereinfachen, kann das Aktuierungselement mit dem Hebelarm und der Befestigungsanordnung und/oder dem zweiten Bauteil verbunden sein. Mit anderen Worten wirkt das Aktuierungselement dann nicht direkt zwischen dem ersten und dem zweiten Bauteil, sondern lediglich indirekt über das Hebelelement von dem zweiten auf das erste Bauteil, oder umgekehrt.

Weiterhin ist es bevorzugt, wenn das Dämpfungselement bei einer Relativbewegung der beiden Bauteile direkt auf die Hebeldrehachse des Hebelelements ein der Bewegung entgegen wirkendes Drehmoment ausübt. Mit anderen Worten greift das Dämpfungselement mit seiner Dämpfungswirkung - etwa durch Reibung - direkt an der Hebelachse an. Dadurch kann eine besonders kompakte Bauweise des Verbindungsmoduls erzielt werden. Beispielsweise ist also kein lang gestrecktes Dämpfungselement o. ä. vorgesehen, das direkt mit beiden Bauteilen verbunden ist. In diesem Fall sind nämlich die Dämpfung und die die Aktuierungskraft übertragende Hebeleinrichtung räumlich voneinander getrennt und die Dämpfung wirkt nicht direkt auf die Hebeldrehachse.

Eine besonders kompakte Bauweise ergibt sich, wenn das Verbindungsmodul in einem vormontierten Zustand das Hebelelement, das Dämpfungselement und das Aktuierungselement umfasst. Diese Ausführungsform ermöglicht außerdem eine besonders einfache Endmontage des Verbindungsmoduls.

Die Erfindung wird im Folgenden rein beispielhaft anhand vorteilhafter Ausführungsformen und unter Bezugnahme auf die Zeichnungen beschrieben. Es zeigen:
- Fig. 1: eine Ausführungsform der erfindungsgemäßen Verbin- dungsmodulbaugruppe in einem ersten Zustand,
- Fig. 2: das Verbindungsmodul von Fig. 1,
- Fig. 3: die Ausführungsform der Verbindungsmodulbaugrup- pe von Fig. 1 in einem zweiten Zustand.

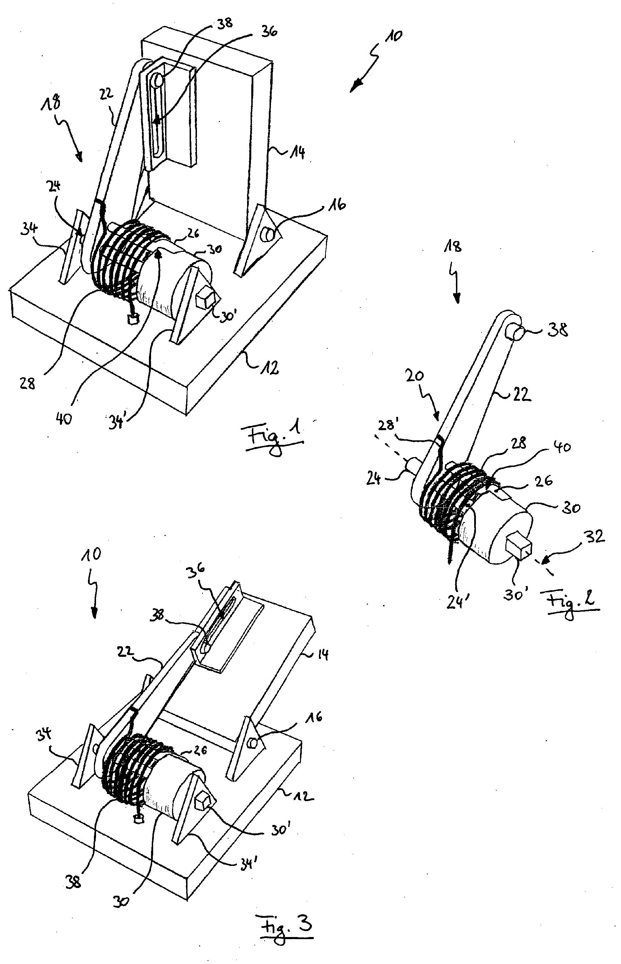

Fig. 1 zeigt schematisch eine Verbindungsmodulbaugruppe 10, die eine kontrollierte Bewegung zwischen einer Bodenplatte 12 und einer beweglichen Platte 14 ermöglicht. Die Bodenplatte 12 und die bewegliche Platte 14 stehen beispielhaft für eine Vielzahl von unterschiedlichen Einheiten, die gegeneinander bewegliche Bauteile umfassen. Wie eingangs schon erwähnt, können diese Einheiten beispielsweise Aschenbecher, Becherhalter, Deckel für Stauräume oder ähnliches im Inneren eines Fahrzeugs sein. Aber auch in anderen Bereichen kann die Verbindungsmodulbaugruppe eingesetzt werden.

Die bewegliche Platte 14 ist an der Bodenplatte 12 befestigt und kann sich um eine Drehachse 16 drehen, so dass die bewegliche Platte 14 verschiedene Winkellagen gegenüber der Bodenplatte 12 einnehmen kann. In Fig. 1 beträgt der Winkel zwischen der beweglichen Platte 14 und der Bodenplatte 12 in etwa 90°. Diese Lage soll einen "geschlossenen" Zustand versinnbildlichen.

Um einer Bewegung der beweglichen Platte 14 gegenüber der Bodenplatte 12 - etwa einer Öffnungsbewegung - eine gewünschte Charakteristik zu geben, ist ein Hebelmodul 18 vorgesehen, das sowohl mit der beweglichen Platte 14 als auch mit der Bodenplatte 12 in Verbindung steht. Das Hebelmodul 18 wird nachfolgend anhand von Fig. 2 beschrieben.

Das Hebelmodul 18 umfasst im Wesentlichen drei separate Einheiten. Die erste Einheit ist ein Hebelelement 20, welches einen Hebelarm 22 und zwei Achsabschnitte 24, 24' umfasst. Weiterhin weist das Hebelelement 20 ein Fixierelement 26 auf.

Außerdem umfasst das Hebelmodul 18 als zweite Einheit eine Spiralfeder 28, die koaxial zu den Achsabschnitten 24, 24' angeordnet ist. Die Spiralfeder 28 ist über einen Spiralfederabschnitt 28' mit dem Hebelarm 22 und - wie aus Fig. 1 zu ersehen - fest mit der Bodenplatte 12 verbunden.

Die dritte Einheit des Hebelmoduls 18 wird durch einen Drehdämpfer 30 gebildet. Der Drehdämpfer 30 ist ebenfalls koaxial zu den Achsabschnitten 24, 24' - und damit auch koaxial zu der Spiralfeder 28 - angeordnet. Die gemeinsame Achse der drei Einheiten wird als Hebeldrehachse 32 bezeichnet.

Zur Verdeutlichung des Aufbaus des Hebelmoduls 18 ist dieses in Fig. 2 alleine dargestellt.

Zur Vormontage des Hebelmoduls 18 wird die Spiralfeder 28 von rechts auf das Hebelelement 20 aufgesteckt und der Spiralfederabschnitt 28' wird in Eingriff mit dem Hebelarm 22 gebracht. Anschließend wird der Drehdämpfer 30 auf den rechten Achsabschnitt 24' des Hebelelements 20 gesteckt.

Nach dem Aufstecken ist der Drehdämpfer 30 drehfest mit dem Hebelelement 20 verbunden. Dies kann beispielsweise durch einen Reibschluss zwischen dem Achsabschnitt 24' und einer entsprechenden Bohrung (nicht gezeigt) des Drehdämpfers 30 gewährleistet sein. Alternativ oder zusätzlich kann das Fixierelement 26 die drehfeste Fixierung bewirken.

Der Drehdämpfer 30 weist an seiner rechten Seite einen Lagerabschnitt 30' mit einem quadratischen Querschnitt auf. Der Lagerabschnitt 30' und der linke Achsabschnitt 24 des Hebelelements 20 dienen zur Befestigung des Hebelmoduls 18 an der Bodenplatte 12 mittels Befestigungsabschnitten 34, 34', wie in Fig. 1 gezeigt. Die Verbindung des Hebelmoduls 18 mit der beweglichen Platte 14 erfolgt über einen Führungsschlitz 36, der an der beweglichen Platte 14 ausgebildet ist. In den Führungsschlitz 36 greift ein Führungsstift 38 ein, der an dem den Achsabschnitten 24, 24' abgewandten Ende des Hebelarms 22 ausgebildet ist.

Wie vorstehend angemerkt, zeigt Fig. 1 einen "geschlossenen" Zustand der beweglichen Platte 14 gegenüber der Bodenplatte 12. Die Spiralfeder 28 weist in diesem Zustand eine Vorspannung auf, die über den Spiralfederabschnitt 28' auf den Hebelarm 22 übertragen wird. Die auf den Hebelarm 22 wirkende Kraft wird über den Führungsstift 38 und den Führungsschlitz 36 auf die bewegliche Platte 14 übertragen. Wenn eine Arretierung (nicht gezeigt) der beweglichen Platte 14 gelöst wird, führt diese Kraft dazu, dass die bewegliche Platte 14 durch den Hebelarm 22 von dem Hebelmodul 18 weggedrückt wird, wodurch in Zusammenwirkung mit der Drehachse 16 eine Klappbewegung entsteht, die durch das in Fig. 1 untere Ende des Führungsschlitzes 36 begrenzt wird.

Ohne den Drehdämpfer 30 würde diese Bewegung abrupt ablaufen, was in den meisten Fällen nicht erwünscht ist. Die bewegliche Platte 14, beispielsweise ein Deckel, würde also aufspringen. Um dies zu vermeiden, ist der Drehdämpfer 30 als bremsendes Element vorgesehen, das die Wirkung der Spiralfeder 28 dämpft. Aufgrund des quadratischen Querschnitts des Lagerabschnitts 30' ist ein äußerer Teil des Drehdämpfers 30 drehfest mit dem ihm zugeordneten Befestigungsabschnitt 34' verbunden. Im Gegensatz dazu kann der linke Achsabschnitt 24 des Hebelelements 20 in dem ihm zugeordneten Befestigungsabschnitt 34 frei rotieren. Der rechte Achsabschnitt 24' ist dahingegen - wie vorstehend bereits ausgeführt - drehfest mit einem in dieser Darstellung nicht zu erkennenden inneren Teil des Drehdämpfers 30 verbunden. Wird der Hebelarm 22 durch die Spiralfeder 28 in eine Drehbewegung versetzt, rotieren die beiden viskos miteinander gekoppelten Teile des Drehdämpfers 30 gegeneinander. Die dadurch entstehende viskose Reibung wirkt der Aktuierungskraft der Spiralfeder 28 entgegen.

Mit anderen Worten wirkt durch das Zusammenspiel der Spiralfeder 28 und des Drehdämpfers 30 ein resultierendes Drehmoment auf das Hebelelement 20, das die Bewegung der beweglichen Platte 14 steuert. Das Bewegungsverhalten der beweglichen Platte 14 relativ zu der Bodenplatte 12 kann somit durch eine geeignete Wahl der elastischen Eigenschaften der Spiralfeder 28 und der Dämpfungscharakteristik des Drehdämpfers 30 an die jeweiligen Erfordernisse angepasst werden. Die vorgenannten Spiralfeder- und Drehdämpfereigenschaften können insbesondere in Abhängigkeit der Winkelstellung der beweglichen Platte 14 relativ zu der Bodenplatte 12 variieren.

Der zu dem vorstehend eingehend anhand von Fig. 1 beschriebenen "geschlossenen" Zustand komplementäre "geöffnete" Zustand der beweglichen Platte 14 ist in Fig. 3 gezeigt.

Der Vorteil der gezeigten Verbindungsmodulbaugruppe 10, die neben dem Hebelmodul 18 auch den Führungsschlitz 36 und die Befestigungsabschnitte 34, 34' umfasst, besteht unter anderem darin, dass das Hebelmodul 18 kompakt ist, d.h. die Aktuierungs- und die Dämpfungsfunktion sind auf engem Raum vereinigt. Zudem ist das Hebelmodul 18einfach vormontierbar.

Die Montage des Hebelmoduls 18 kann beispielsweise derart vonstatten gehen, dass die Aufsteckbewegung des Drehdämpfers 30 während der Vormontage nicht durch eine Abwinklung 40 des dem Hebelarm 22 abgewandten Endes des Fixierelements 26 begrenzt wird, sondern etwas weiter fortsetzt wird. Dabei wird das Fixierelement 26 elastisch nach außen gebogen. Anschließend wird das derart vormontierte Hebelmodul 18 zwischen die Befestigungsabschnitte 34, 34' eingebracht und der Achsabschnitt 24 in den Befestigungsabschnitt 34 "eingefädelt". Danach wird der Drehdämpfer 30 wieder nach außen bewegt, wodurch der Lagerabschnitt 30' in den Befestigungsabschnitt 34' eingeführt wird. Bei Erreichen der korrekten Position des Drehdämpfers 30 schnalzt das Fixierelement 26 in seine ursprüngliche Lage zurück und sichert die Lage des Drehdämpfers 30 und damit das Hebelmodul 18 zwischen den Befestigungsabschnitten 34, 34'.

Aus vorstehenden Erläuterungen ist ersichtlich, dass das Hebelmodul 18 nur in einem vormontierten Zustand an den Befestigungsabschnitt 34, 34' befestigt werden kann.

Andere - nicht gezeigte - Ausführungsformen der erfindungsgemäßen Verbindungsmodulbaugruppe 10 können Hebelmodule 18 umfassen, die mehr als einen Hebelarm 22 aufweisen. Außerdem kann eine beliebige Anzahl von Spiralfedern 28 vorgesehen sein, die z.B. beiderseits des Hebelarms 22 an dem Hebelelement 20 angeordnet sind. Außerdem kann vorgesehen sein, dass beide Achsabschnitte 24, 24' mit Drehdämpfern 30 versehen sind, so dass das Hebelelement 20 nicht in direktem Kontakt mit den Befestigungsabschnitten 34, 34' steht. Die Lagerung des Hebelmoduls 18 erfolgt in diesem Fall lediglich über die Lagerabschnitte 30'. Die Bewegungscharakteristik der beweglichen Platte 12 kann somit auch über die Anzahl der Spiralfedern 28 oder der Drehdämpfer 30 variiert werden.

Der Drehdämpfer 30 kann aus einer Reihe von verschiedenen Dämpfern gewählt werden. Beispielsweise kann ein Achsreibungsdämpfer oder eine Silikonbremse vorgesehen sein. Andere Typen von Dämpfungsmechanismen der Hebeldrehachse 32 können ebenfalls die gewünschte Wirkung erzielen.

### Bezugszeichenliste

- 10: Verbindungsmodulbaugruppe
- 12: Bodenplatte
- 14: bewegliche Platte
- 16: Drehachse
- 18: Hebelmodul
- 20: Hebelelement
- 22: Hebelarm
- 24, 24': Achsabschnitt
- 26: Fixierelement
- 28: Spiralfeder
- 28': Spiralfederabschnitt
- 30: Drehdämpfer
- 30': Lagerabschnitt
- 32: Hebeldrehachse
- 34, 34': Befestigungsabschnitt
- 36: Führungsschlitz
- 38: Führungsstift
- 40: Abwinklung

## Patentansprüche

1. Verbindungsmodulbaugruppe, insbesondere zur Verwendung in einem Kraftfahrzeug, zum beweglichen Verbinden eines ersten und eines zweiten Bauteils (14, 12), die umfasst:
- ein Verbindungsmodul (18), das zumindest ein Hebelelement (20) mit zwei Achsabschnitten (24, 24'), zumindest ein elastisches Aktuierungselement (28) und zumindest ein Dämpfungselement (30) aufweist,
- eine mit dem ersten Bauteil (14) verbundene Führungsanordnung (36) mit einem Anschlagelement, die mit dem Hebelelement (20) des Verbindungsmoduls (18) zusammenwirkt, um eine Relativbewegung der Bauteile (14, 12) zu kontrollieren und zu begrenzen, und
- eine mit dem zweiten Bauteil (12) verbundene Befestigungsanordnung (34, 34'), wobei das Hebelelement (20) relativ zu der Befestigungsanordnung (34, 34') drehbar um eine Hebeldrehachse (32) angeordnet ist,
wobei das Hebelelement (20) und das Dämpfungselement (30) als separate und für eine Vormontage miteinander kombinierbare Einheiten ausgebildet sind, die in einem kombinierten Zustand eine Befestigung des Verbindungsmoduls (18) an der Befestigungsanordnung (34, 34') ermöglichen.

2. Verbindungsmodulbaugruppe nach Anspruch 1,
**dadurch gekennzeichnet, dass**
das Dämpfungselement (30) drehfest mit dem Hebelelement (20) und der Befestigungsanordnung (34, 34') und/oder dem zweiten Bauteil (12) verbunden ist, wobei das Dämpfungselement (30) eine Drehung des Hebelelements (20) relativ zu der Befestigungsanordnung (34, 34') zulässt.

3. Verbindungsmodulbaugruppe nach Anspruch 1 oder 2,
**dadurch gekennzeichnet, dass**
einer der Achsabschnitte (24) des Hebelelements (20) mit der Befestigungsanordnung (34, 34') verbunden ist und der andere Achsabschnitt (24') mit dem Dämpfungselement (30) verbunden ist.

4. Verbindungsmodulbaugruppe nach Anspruch 1 oder 2,
**dadurch gekennzeichnet, dass**
beide Achsabschnitte (24, 24') des Hebelelements (20) mit jeweils einem Dämpfungselement (30) verbunden sind.

5. Verbindungsmodulbaugruppe nach zumindest einem der vorstehenden Ansprüche,
**dadurch gekennzeichnet, dass**
das Dämpfungselement (30) einen Lagerabschnitt (30') zur Verbindung des Dämpfungselements (30) mit der Befestigungsanordnung (34') aufweist, wobei der Lagerabschnitt (30') in dem kombinierten Zustand des Dämpfungselements (30) und des Hebelelements (20) koaxial zu den Achsabschnitten (24, 24') des Hebelelements angeordnet ist.

6. Verbindungsmodulbaugruppe nach zumindest einem der vorstehenden Ansprüche,
**dadurch gekennzeichnet, dass**
das Aktuierungselement (28) mindestens eine Feder, insbesondere eine koaxial zu der Hebeldrehachse (32) angeordnete Spiralfeder, aufweist.

7. Verbindungsmodulbaugruppe nach zumindest einem der vorstehenden Ansprüche,
**dadurch gekennzeichnet, dass**
die Hebeldrehachse (32) parallel zu einer Bauteildrehachse (16) angeordnet ist, um die das erste Bauteil (14) relativ zu dem zweiten Bauteil (12) drehbar ist.

8. Verbindungsmodulbaugruppe nach zumindest einem der vorstehenden Ansprüche,
**dadurch gekennzeichnet, dass**
die Führungsanordnung (36) einen Schlitz oder eine Nut umfasst, die mit einem Führungsstift (38) des Hebelelements (20) zusammenwirkt.

9. Verbindungsmodulbaugruppe nach zumindest einem der vorstehenden Ansprüche,
**dadurch gekennzeichnet, dass**
die Befestigungsanordnung zwei Befestigungselemente (34, 34') umfasst, zwischen denen das Hebelelement (20) und das Dämpfungselement (30) in einem endmontierten Zustand des Verbindungsmoduls (18) angeordnet sind.

10. Verbindungsmodulbaugruppe nach zumindest einem der vorstehenden Ansprüche,
**dadurch gekennzeichnet, dass**
das Aktuierungselement (28) mit dem Hebelelement (20) und der Befestigungsanordnung (34, 34') und/oder dem zweiten Bauteil (12) verbunden ist.

11. Verbindungsmodulbaugruppe nach zumindest einem der vorstehenden Ansprüche,
**dadurchgekennzeichnet, dass**
das Dämpfungselement (30) bei einer Relativbewegung der beiden Bauteile (12, 14) direkt auf die Hebeldrehachse (32) des Hebelelements (20) ein der Bewegung entgegen wirkendes Drehmoment ausübt.

12. Verbindungsmodulbaugruppe nach zumindest einem der vorstehenden Ansprüche,
**dadurchgekennzeichnet, dass**
das Verbindungsmodul (18) in einem vormontierten Zustand das Hebelelement (20), das Dämpfungselement (30) und das Aktuierungselement (28) umfasst.
